# EUROPÄISCHE PATENTSCHRIFT

(11) **EP 0 404 033 B1**
(45) Veröffentlichungstag und Bekanntmachung des Hinweises auf die Patenterteilung: **21.12.1994**
(21) Anmeldenummer: 90111489.2
(22) Anmeldetag: 19.06.1990
(51) Int. Cl.: C09D 5/44

(54) **Wässrige Lösung oder Dispersion eines Bindemittels für an der Kathode abscheidbare wässrige Überzugsmittel und ihre Verwendung zur kathodischen Abscheidung**
Aqueous binder solution or dispersion for cathodically depositable aqueous coatings and its use in cathodic electrodeposition
Solution ou dispersion aqueuse d'un liant pour revêtements aqueux déposables à la cathode et son utilisation en déposition cathodique

(30) Priorität: 21.06.1989 DE 3920214
(43) Veröffentlichungstag der Anmeldung: 27.12.1990
(73) Patentinhaber: Herberts Gesellschaft mit beschränkter Haftung, 42285 Wuppertal (DE)
(72) Erfinder: Kann, Wolfgang, Dr., D-4322 Sprockhövel 1 (DE); Klein, Klausjörg, D-5600 Wuppertal 2 (DE); Patzschke, Hans-Peter, Dr., D-5600 Wuppertal 2 (DE)
(74) Vertreter: Türk, Gille, Hrabal, Leifert

(56) Entgegenhaltungen:
- EP-A- 0 287 089
- EP-A- 0 385 292

## Beschreibung

Die Erfindung betrifft Bindemittel für an der Kathode abscheidbare wäßrige Überzugsmittel, sowie diese Überzugsmittel, die ein durch Säure neutralisiertes basisches filmbildendes Harz, organische Lösemittel, sowie gegebenenfalls einen Vernetzer für das filmbildende Harz, übliche Lackzusätze, Pigmente und Füllstoffe enthalten. Sie betrifft auch die Verwendung der Überzugsmittel zur Beschichtung elektrisch leitfähiger Substrate durch kathodische Abscheidung.

Die Elektrotauchlackierung ist ein bekanntes Verfahren zur Beschichtung der Oberfläche von elektrisch leitenden Objekten, die z.B. aus Metall oder leitenden oder leitend gemachten Kunststoffen bestehen können. Dabei wird der zu beschichtende Gegenstand in ein wäßriges Beschichtungsbad getaucht, und im Falle der kathodischen Abscheidung als Kathode an eine Gleichstromquelle angeschlossen, wobei durch den fließenden Strom das Überzugsmittel bzw. der Lack auf der Werkstoffoberfläche koaguliert und abgeschieden wird. Das fest haftende Material wird dann durch Lufttrocknung oder Erhitzen physikalisch zum Verfließen und gegebenenfalls chemisch zum Vernetzen gebracht, um eine homogene, glatte, resistente Oberfläche zu erzeugen.

Das Verfahren der Elektrotauchlackierung erlaubt es auch, daß teilweise ungünstig zu erreichende Hohlräume beschichtet werden. Ein Ziel der Optimierung des Verfahrens ist es deshalb, eine möglichst umfassende Beschichtung von Hohlräumen zu erreichen, ein anderer Gesichtspunkt ist eine glatte und homogene Schichtverteilung auf den Außenflächen zu erzielen.

Verschiedene Parameter und Einflußgrößen können variiert werden, um diese Anforderungen zu erfüllen. So ist allgemein mit einer Erhöhung der Abscheidespannung ein besserer Umgriff, d.h. eine verbesserte Hohlraumbeschichtung zu erreichen. Es ist aber abhängig von dem gewählten Bindemittelsystem die Abscheidespannung nur in gewissem Rahmen zu erhöhen, da sonst auf den den Gegenelektroden zur Kathode nächstliegenden Seiten Beschichtungsstörungen in Form von Durchbrüchen entstehen, die auch zu optisch störenden Schichtdickenunterschieden führen. Eine Möglichkeit, die Schichtdickenverteilung auf glatten Substratoberflächen zu verbessern, ist eine erhöhte Abscheidetemperatur. Es hat sich aber gezeigt, daß auch durch diese Maßnahme die Durchbruchsspannung des Beschichtungsmaterials negativ beeinflußt wird. Außerdem ergibt sich durch die in der Industrie benutzten Beschichtungsanlagen ein bestimmter Temperaturbereich, in dem mit möglichst geringen Eingriffen von außen gearbeitet werden kann. Dort sind aufzuwendende Heiz- oder Kühlenergie am günstigsten.

Eine weitere Einflußgröße ist der Neutralisationsgrad der eingesetzten Harzmaterialien. Mit einem möglichst geringen Säurezusatz in dem Beschichtungsbad, d.h. mit niedrigem MEQ-Wert (Milliäquivalente Säure pro 100 g Festkörper) ist die Abscheidung des Lackes am günstigsten. Da durch den fließenden Strom an der Kathode OH⁻-Ionen erzeugt werden, die dann die an den Micellen des Beschichtungsbades vorhandenen dissoziierten Säuremoleküle neutralisieren, ist es einsichtig, daß ein nur geringer Säurezusatz die Menge der zur Ausfällung der Bindemittel notwendigen OH⁻ Ionen vermindert und so ein geringerer Stromverbrauch pro abgeschiedener Lackmenge zu erzielen ist. Dabei wird auch der Umgriff des Beschichtungsvorganges positiv beeinflußt. Eine Grenze findet die Reduktion der Säuremenge dadurch, daß ein stabiles Beschichtungsbad erzeugt werden muß, das unter den üblichen Betriebsbedingungen nicht spontan ausfällt.

Entstehen Koagulate, so lagern sich diese auch mit auf der Lackoberfläche ab und stören die Qualität des Films, da diese Partikel nicht mehr homogen verfließen. Zusätzlich werden dadurch vorhandene weitere Aggregate gestört, z.B. verstopfen Filter und Rohrleitungen, Ultrafiltrationseinrichtungen werden beeinträchtigt.

Ein weiterer Einflußparameter auf die Schichtverteilung und die Beschichtungsbedingungen ist der Lösungsmittelgehalt des Badmaterials. Durch Zusatz von geringen Mengen möglichst organophiler hydrophober Lösungsmittel wird bei gleichen Beschichtungsbedingungen die abgeschiedene Schichtstärke erhöht oder es ist möglich, die Beschichtungsbedingungen zu ändern, um eine konstante Schichtdicke zu erreichen. Außerdem verfließt der Lack während des Vernetzungsvorgangs besser. Eine Beeinträchtigung des Bades findet nur insoweit statt, daß durch den höheren Lösungsmittelgehalt die verschiedenen Micellen offensichtlich leichter größere Koagulate und Verunreinigungen bilden. Diese müssen entfernt werden oder die Stabilität des Lackes muß erhöht werden durch z.B. eine größere Abstoßung der Teilchen untereinander. Das ist auch zu erreichen, indem die Neutralisation der Micellen erhöht wird.

Aufgabe der Erfindung ist die Bereitstellung von an der Kathode abscheidbaren wäßrigen Überzugsmitteln, deren anwendungstechnische Eigenschaften, wie Umgriff, Schichtverteilung, Abscheideäquivalent verbessert sind, ohne daß die Stabilität der Bäder hierdurch beeinträchtigt wird.

Überraschenderweise hat sich gezeigt, daß diese Aufgabe gelöst werden kann durch eine wäßrige Lösung oder Dispersion eines Bindemittels für an der Kathode abscheidbare wäßrige Überzugsmittel, enthaltend ein durch Säure neutralisiertes, basisches filmbildendes Harz, organische Lösemittel, sowie gegebenenfalls Vernetzer für das filmbildende Harz, die dadurch gekennzeichnet ist, daß das durch Säure neutralisierte basische filmbildende Harz in Form einer wäßrigen Lösung oder Dispersion vorliegt, die ein Gemisch ist aus und erhalten wurde durch Vermischen von
A) 95 bis 50 Gew.-% (bezogen auf den Harzfestkörper) einer wäßrigen Lösung oder Dispersion eines oder mehrerer neutralisierter, basischer filmbildender Harze mit einem Harzfestkörpergehalt von 25 bis 55 Gew-% und mit einem Lösemittelgehalt über 4 Gew.-%, jeweils bezogen auf die Gesamtlösung oder -dispersion und einer Mindestfilmbildungstemperatur unter 30°C, und
B) 5 bis 50 Gew.-% (bezogen auf den Harzfestkörper) einer wäßrigen Lösung oder Dispersion eines oder mehrerer durch Säure neutralisierter basischer filmbildender Harze mit einem Harzfestkörpergehalt von 25 bis 55 Gew.-% und mit einem Lösemittelgehalt unter 3 Gew.-%, jeweils bezogen auf die Gesamtlösung oder -dispersion und einer Mindestfilmbildungs-temperatur von mindestens 27°C,
wobei die Differenz der Mindestfilmbildungstemperaturen der Dispersionen A) und B) mindestens 10°C beträgt.

Im Rahmen der Erfindung hat es sich somit gezeigt, daß wäßrige Überzugsmittel zur kathodischen Abscheidung, die eine große Badstabilität aufweisen und ausgezeichneten Umgriff, gute Schichtverteilung und verbesserte Abscheideäquivalente ergeben, erhalten werden, wenn in derartigen Bädern mit üblichem Gehalt an organischen Lösemitteln ein Teil des Bindemittels ersetzt wird durch Zugabe einer aliquoten Menge einer wäßrigen Lösung oder Dispersion eines neutralisierten, basischen filmbildenden Harzes, die besonders lösungsmittelarm ist und eine höhere Filmbildungstemperatur besitzt.

Ein wichtiges Charakteristikum der erfindungsgemäßen Bindemitteldispersionen ist deren Mindestfilmbildungstemperatur. Diese wird nach folgendem Verfahren bestimmt:
Aus dem der Dispersion zugrundeliegenden basischen filmbildenden Harz wird durch Neutralisation mit der benötigten Menge Säure in vollentsalztem Wasser eine wäßrige Lösung oder Dispersion mit einem Harzfestkörpergehalt von 25 bis 55 Gew.-%, bezogen auf die Gesamt lösung oder -dispersion hergestellt, die den gewünschten Lösemittelgehalt aufweist. Diese Lösung oder Dispersion wird durch Zusatz von vollentsalztem Wasser zu einem Klarlack, d. h. ohne Pigmente und Füllstoffe, mit einem Festkörpergehalt von 15 bis 20 Gew.-% verdünnt. Der Festkörpergehalt (FK) ist das Gewicht des aus dem Klarlack bei Einbrennen bei einer Temperatur von 150°C erhaltenen Rückstandes (als Prozent des Gesamtgewichtes des Klarlackes), beispielsweise wie bestimmt nach DIN 53 216. Der so erhaltene Klarlack wird einen Tag lang homogenisiert und nicht weiter mit Additiven korrigiert. Es werden dann bei konstanter Abscheidespannung bei verschiedenen Temperaturen gleichartige Substrate, z.B. Stahlbleche, die als Kathode geschaltet sind, beschichtet. Als Anode kann beispielsweise ein Stahlblech im Abstand von 5 cm dienen. Hierbei ist es wichtig, die Abscheidespannung konstant zu halten. Die Festlegung eines bestimmten Wertes der Abscheidespannung ist jedoch nicht notwendig, solange die Abscheidespannung unter der Durchbruchsspannung liegt, d.h. solange porenfreie Filme gebildet werden. Nach dem Einbrennen wird die Schichtstärkenverteilung auf den Substraten bestimmt. Die Schichtstärke wird in Funktion der Badtemperatur bei der Abscheidung in einem Diagramm aufgetragen. Aus der erhaltenen Kurve wird als Mindestfilmbildungstemperatur der Punkt bestimmt, bei dem der abgeschiedene Film ein Minimum der Schichtstärke aufweist. Erfolgt die Abscheidung bei Temperaturen über der Mindestfilmbildungstemperatur, so bilden sich beim Einbrennen glatte gleichmäßig verlaufende Oberflächen. Die Mindestfilmbildungstemperatur der Lösung oder Dispersion der Komponente A) des erfindungsgemäßen überzugsmittels sollte unter 30°C liegen.

Die Mindestfilmbildungstemperatur der wäßrigen Dispersion oder Lösung der Komponente B) liegt bei mindestens 27°C, bevorzugt bei mindestens 30°C und besonders bevorzugt bei mindestens 33°C. Die Obergrenze liegt bevorzugt bei bis zu 85°C, insbesondere bei bis zu 75°C und besonders bevorzugt bei bis zu 65°C. Bevorzugte Bereiche liegen bei 27 bis 85°C, insbesondere bei 30 bis 75°C und besonders bevorzugt bei 33 bis 65°C.

In den erfindungsgemäßen wäßrigen überzugsmitteln wird der Bindemittelanteil durch eine Mischung wäßriger Lösungen oder Dispersionen von neutralisierten basischen filmbildenden Harzen gebildet, wobei nach Bedarf auch ein oder mehrere Vernetzer vorhanden sein können. Die Dispersionen stellen ein Gemisch aus einer Dispersion mit einem Lösemittelgehalt über 4 Gew.-% und einer Mindestfilmbildungstemperatur unter 30°C und einer Dispersion mit einem geringen Lösemittelgehalt unter 3 Gew.-% und einer höheren Mindestfilmbildungstemperatur von mindestens 27°C dar, wobei die Differenz der Mindestfilmbildungstemperaturen der beiden Dispersionen mindestens 10°C beträgt.

Als Harze in den beiden Dispersionen sind solche mit gleichem oder unterschiedlichem chemischen Aufbau geeignet. So ist es beispielsweise möglich der Dispersion A) mit hohem Lösemittelgehalt und geringer Mindestfilmbildungstemperatur eine "Zumischdispersion" B) zuzumischen, die entweder das gleiche oder ein unterschiedliches Harz wie die Dispersion A) enthält, wobei die Zumischdispersion B) jedoch einen verringerten Lösemittelgehalt und eine um mindestens 10°C höhere Mindestfilmbildungstemperatur aufweist.

Die Zumischdispersion B), bei der es sich um eine besonders lösemittelarme Dispersion handelt, kann in üblicher Weise hergestellt werden. Als Ausgangsdispersion kann eine übliche Bindemitteldispersion dienen, die auch die gleiche Bindemitteldispersion wie die Dispersion A) sein kann. Aus der Ausgangsdispersion mit höherem Lösemittelgehalt können die Lösemittel in üblicher Weise entfernt werden, wobei beispielsweise die azeotrope Destillation geeignet ist.

Beispielsweise können besonders lösungsmittelarme Dispersionen hergestellt werden nach dem Verfahren der DE-A 37 12 910. Ein derartiges Verfahren besteht beispielsweise darin, ein Bindemittel oder eine Bindemittelmischung in einem Lösemittel herzustellen, zu neutralisieren, dann in die Wasserphase überzuführen und das Lösemittel daraus, z.B. durch azeotrope Destillation, zu entfernen.

Die Lösungs- bzw. Dispersionskomponente B) weist insbesondere einen sehr geringen Gehalt an organischen Lösemitteln auf, die mit Wasser nicht verträglich bzw. organophil sind. Diese besitzen einen starken Einfluß auf die Dispersionseigenschaften.

Es ist sehr günstig, wenn die Zusatzdispersionen B) außerdem einen möglichst niedrigen Neutralisationsgrad aufweisen. Beispielsweise kann die Neutralisation bei 10 bis 40 mmol Säure pro 100 g Festkörper liegen. Beispiele für derartige Dispersionen mit niedrigem Neutralisationsgrad sind ebenfalls in der DE-A 37 12 910 beschrieben, es handelt sich dabei um stabile, nicht sedimentierende Dispersionen.

Im allgemeinen werden die aus den Komponenten A) und B) bestehenden Bindemitteldispersionen der erfindungsgemäßen wäßrigen Überzugsmittel durch Vermischen der beiden Komponenten A) und B) in den angegebenen Mengen erhalten. So wird bevorzugt eine derartige Menge der Zusatzdispersion B) zugesetzt, daß diese 5 bis 50 Gew.-%, bevorzugt 15 bis 40 Gew.-%, des Harzanteiles in dem Elektrotauchbad liefert. Die Zusatzdispersion kann der Dispersion A) sofort bei der Herstellung des überzugsmittels, aber auch zu einem späteren Zeitpunkt zugefügt werden. Das erhaltene Gemisch wird rasch homogenisiert.

Das Beschichtungsmittel kann nach Bereitstellen der Mischung von A) und B) mit üblichen Lackzusätzen, Additiven, Pigmenten und/oder Füllstoffen, die bevorzugt mit einem wäßrigen Pastenharz angerieben sind, versetzt werden, die dem Fachmann geläufig bzw. die auf diesem Gebiet üblich sind. Zum Einstellen günstiger Beschichtungsbedingungen können auch als Lackzusätze übliche organische Lösemittel zugesetzt werden.

Bei den in den erfindungsgemäßen Dispersionen A) und B) enthaltenen filmbildenden Harzen handelt es sich um übliche durch Säure neutralisierbare basische filmbildende Harze, wie sie auf dem Gebiet der kathodisch abscheidbaren wäßrigen Überzugsmittel eingesetzt werden. Die Harze können als einzelne Harze oder als Gemisch, d. h. ein oder mehrere Harze vorliegen. Es kann sich um selbstvernetzende Harze und/oder fremdvernetzende Harze handeln. So können beispielsweise in der Dispersion A) die Harze entweder selbstvernetzend oder fremdvernetzend sein oder es können Gemische von selbst- und fremdvernetzenden Harzen vorliegen. In der Dispersion B) sind die Harze insbesondere entweder selbstvernetzend oder fremdvernetzend.

Falls fremdvernetzende Harze in den Dispersionen A) und/oder B) vorliegen, werden diesen Dispersionen übliche Vernetzer für die fremdvernetzenden Harze zugesetzt. Bei den Vernetzern handelt es sich um auf diesem Gebiet übliche Vernetzer, die dem Fachmann geläufig sind. Die Vernetzer werden in den üblichen zur Vernetzung benötigten Mengen zugesetzt. Allgemein ist es günstig, die Vernetzermenge nicht höher als 40 Gew.-%, bezogen auf den Harzfestkörper (also Summe der filmbildenden Harze und der Vernetzer), zu halten. Die Dispersionen A) und B) können je nach Bedarf die benötigten Vernetzer enthalten. Dabei ist es auch möglich, daß die für in der Dispersion B) benötigten Vernetzer allein in der Dispersion A) enthalten sind und erst durch das Vermischen der Dispersionen A) und B) den fremdvernetzenden filmbildenden Harzen der Dispersion B) zugeführt werden. Die Härter werden generell bereits bei der Herstellung der Dispersionen A) und/oder B) als Harzkomponente zugesetzt; dementsprechend beziehen sich die auf den Harzfestkörper berechneten Mengenangaben von 95 bis 50 Gew.-% für die Dispersion A) bzw. 5 bis 50 Gew.-% für B) jeweils auf den aus filmbildendem Harz und gegebenenfalls vorhandenen Vernetzer gebildeten Harzfestkörper.

Bei den für die Komponente A) und B) verwendeten neutralisierbaren basischen filmbildenden Harzen handelt es sich um übliche auf dem Gebiet dder kathodischen Abscheidung verwendeten Harze. Beispiele für solche Harze sind im folgenden für die Dispersionskomponente B) sowie für die Dispersionskomponente A) aufgeführt. Im folgenden sind auch Beispiele für Vernetzer für derartige fremdvernetzende filmbildende Harze aufgeführt. Grundsätzlich können die filmbildenden Harze, die für die Dispersionskomponente A) beschrieben werden auch für die Dispersionskomponente B) eingsetzt werden und umgekehrt. Gleiches gilt für die nachfolgend als Beispiele angegebenen Vernetzer.

Als Bindemittel für die Zusatzdispersion B) sind beispielsweise Harze geeignet, wie sie in EP-A-82 291 oder DE-OS 36 15 810 oder EP-AO 23 43 95 beschrieben sind. Es sind beispielsweise Aminoepoxidharze, die mit bekannten primären, sekundären oder tertiären Aminen hergestellt wurden. Der chemische Aufbau der Aminoepoxidharze und seine Eigenschaften können in weitem Umfang variiert werden. Durch Auswahl von Epoxidharzen und den benutzten Aminen, durch Änderung in der Menge der Amino- und Hydroxylfunktion, durch Variation des Molekulargewichtes, durch Änderung des Verhältnisses von weichen oder harten Molekülsegmenten.

Hydroxylgruppenhaltige Amino-Epoxidharze werden zweckmäßig aus Polyglycidylethern mit mindestens einer, bevorzugt zwei 1,2-Epoxidgruppen pro Molekül erhalten. Unter Polyglycidylether im Rahmen dieser Erfindung werden vorzugsweise solche Polyglycidylether der allgemeinen Formel 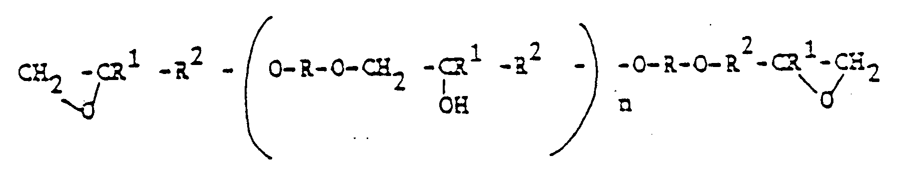
mit 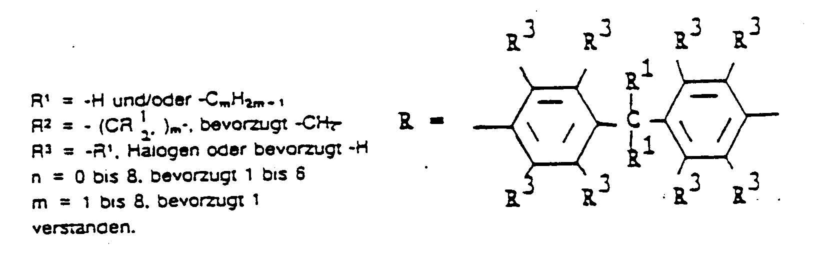
Diese Polyglycidylether haben eine mittlere Molmasse von etwa 300 bis 5000 und ein Epoxid-Äquivalentgewicht von ca. 170 bis 2500. Solche Harze sind Umsetzungsprodukte von Epichlorhydrin oder Methylepichlorhydrin mit Dihydroxydiphenylmethan (Bisphenol F) oder Dihydroxydiphenylpropan (Bisphenol A) sowie mit Dihydroxybenzophenon oder Dihydroxynaphthalin. Polyepoxide mit geeignetem Molekulargewicht werden entweder durch Auswahl der Molverhältnisse von Bisphenol und Epichlorhydrin oder durch Reaktion der monomeren Diglycidylverbindung mit weiterem Bisphenol unter Zusatz von Katalysatoren wie Lewis-Säuren oder Phosphoniumsalzen hergestellt.

Das Aminoepoxidharz kann auch mit gesättigten oder ungesättigten Polycarbonsäuren und/oder Hydroxycarbonsäuren modifiziert werden. (Cyclo)-aliphatische und/oder aromatische Polycarbonsäuren sind z.B. Adipinsäure, Sebacinsäure, Isophthalsäure oder dimere Fettsäure, OH-funktionelle Alkylcarbonsäuren sind beispielsweise Milchsäure, Dimethylolpropionsäure oder auch carboxyl- und hydroxylgruppenhaltige Polyester. Bei der Umsetzung von überschüssigem Polyglycidylether mit niedrigem Molekulargewicht mit Polycarbonsäuren und Polyalkoholen werden modifizierte Polyglycidylether als Intermediat erhalten. Diese können dann weiter mit Aminen oder Aminoalkoholen oder Gemischen davon reagieren.

Es können auch heterocyclische Polyepoxidverbindungen verwendet werden, wie Triglycidylisocyanurat oder Diepoxide aus Bisimiden. Eine weiter geeignete Klasse von Polyepoxiden sind Polyglycidylether von phenolischen Novolakharzen, die dann eine erhöhte Funktionalität zwischen zwei und sechs Glycidylgruppen pro Molekül bewirken können. Durch Defunktionalisieren mit substituierten Phenolen können auch elastifizierende Elemente eingebaut werden, wenn es sich als günstig erweist. Auch Polyglycidylester von Polycarbonsäuren wie Hexahydrophthalsäurediglycidylester oder Fumarsäurediglycidylester können verwendet werden.

Das Einführen der Aminogruppen erfolgt entweder durch Addition von NH-reaktiven Verbindungen an die Epoxidgruppe oder auch durch Umsetzen der Hydroxylgruppen des Grundharzes mit basischen Monoisocyanaten, die durch Reaktion von aromatischen oder aliphatischen oder cycloaliphatischen Di- oder Polyisocyanaten oder Gemischen davon mit Dialkylaminoalkanolen entstehen. Als NH-reaktive Verbindungen werden primäre Monoalkylamine und/oder bevorzugt sekundäre Monoamine verwendet. Verbindungen dieser Substanzklassen sind z.B. Diethylamin, Dimethylaminopropylamin, Diethylaminoethylamin, Diethanolamin, Methylaminoethanol, das Diketimin des Diethylentriamins, Morpholin oder Oxazolidin. Beim Einsatz von primären Aminen reagiert das Amin je nach den angebotenen stöchiometrischen Mengen der Epoxidgruppen unter Molekülvergrößerung, werden dagegen sekundäre Diamine eingesetzt, wie N,N'-Dialkyldiaminoalkane oder Umsetzungsprodukte von Glycidylestern einer verzweigten Monocarbonsäure mit Diaminoalkanen im doppelten Molverhältnis, so tritt eine Kettenverlängerung ein. Als Monoepoxide können in diesem Fall auch gesättigte oder ungesättigte Glycidylether verwendet werden. Dabei entstehen durch die Reaktion mit der Epoxidgruppe automatisch eine Anzahl von Hydroxylgruppen mit, weitere können noch durch Hydroxyalkylamine gezielt eingebaut werden. Es können alle Amine als Mischung mit den Epoxidgruppen umgesetzt werden oder es ist auch eine stufenweise Reaktionsfolge möglich.

Die Molverhältnisse zwischen Epoxid- und Aminogruppen werden so gewählt, daß ein vollständiger Einbau des Amins sichergestellt ist. Anderenfalls können Beschichtungsstörungen bei der elektrischen Abscheidung auftreten. Eine erhöhte Reaktionstemperatur zum Ende der Umsetzung ist deshalb günstig ebenso wie ein geringer Epoxydüberschuß.

Weitere Beispiele für geeignete Harze sind in EP-A 0 261 385 beschrieben. Es handelt sich um Harze, die durch radikalische Polymerisation von olefinische Gruppen enthaltenden Monomeren erhalten werden. Sie können gegebenenfalls OH, SH oder Aminogruppen enthalten oder andere funktionelle Gruppen. Als radikalisch polymerisierbare Monomere werden beispielsweise Monomere der folgenden allgemeinen Formel eingesetzt:

R-CH=CR'-X-A-N(R'')₂

worin
- R: = R' oder -X-CₙH₂ₙ₋₁
- R': = -H oder -CₙH₂ₙ₋₁
- R'': = -R', -CₙH₂ₙOH und/oder -CₙH₂ₙNR₂
- X: = -COO-, -CONH- oder -H-
- A: = -CₙH₂ₙ- oder 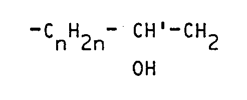 und
- n: = 1 bis 8, bevorzugt 1 bis 4
bedeuten.

Beispiele für ungesättigte N-gruppenhaltige Monomere sind N-Dialkyl- oder N-Monoalkylaminoalkyl(meth)acrylate wie beispielsweise N-Diethylaminoethylmethacrylat oder N-tert.Butylaminoethylacrylat oder die entsprechenden N-Alkanol-Verbindungen, N-Dialkyl- oder N-Monoalkylaminoalkyl(meth)acrylamid und/oder Vinylgruppen enthaltende heterocyclische Verbindungen mit einem oder mehreren basischen Stickstoffatomen wie beispielsweise N-Vinylimidazol.

Unter, radikalisch polymerisierbaren hydroxylgruppenhaltigen Verbindungen werden solche verstanden, die neben einer polymerisierbaren ethylenisch ungesättigten Gruppe noch mindestens eine Hydroxylgruppe an einem C₂ bis C₂₀ linearen, verzweigten oder cyclischen Kohlenstoffgerüst enthalten. Besonders geeignet sind (Meth)acrylsäurehydroxyalkylester wie beispielsweise 2-Hydroxyethylacrylat, Butandiol-1,4-monoacrylat, 2-Hydroxypropylmethacrylat, Polypropylenglykolmonoacrylat oder Fumarsäuredihydroxyalkylester. Es können auch N-Hydroxyethylacrylamid oder N-(2-Hydroxypropyl)methacrylamid eingesetzt werden. Andere hydroxylgruppenhaltige Verbindungen sind Allylalkohol, Monovinylether von Polyalkoholen, z.B. wie der Monovinylether des Butandiols, sowie hydroxylgruppenhaltige Allylether oder -ester wie 2,3-Dihydroxypropylmonoallylether. Besonders geeignet sind Hydroxyethyl-, Hydroxypropyl- und Butandiol-1,4-mono(meth)acrylat.

Die Auswahl der radikalisch polymerisierbaren Monomeren, die außer der ehtylenisch ungesättigten Verbindung keine weiteren reaktiven Gruppen haben, erfolgt nach der Verträglichkeit der Harzkomponenten und nach den Verfließeigenschaften des Lackfilms. Es werden Acrylsäurealkylester, Methacrylsäurealkylester und/oder Maleinsäuredialkylester eingesetzt. Dabei können die Alkylreste linear oder verzweigt aliphatisch, cycloaliphatisch, oder aromatisch sein mit 1 bis 20 Kohlenstoffatomen. Monomere, die eine hohe Glasübergangstemperatur liefern sind z.B. solche vom Vinylaromaten-Typ, wie Styrol, Alkylstyrole, wie Vinyltoluol, oder Methacrylsäureester mit kurzer Seitenkette wie Methylmethacrylat, Propylmethacrylat, Cyclohexylmethacrylat, Methacrylamid oder (Meth)Acrylnitril. Monomere, die eine niedrige Glasübergangstemperatur liefern, sind häufig Acrylester mit einer langen Kette, wie z.B. Butylacrylat oder Laurylacrylat.

Die Polymerisation erfolgt in bekannter Weise durch Lösungspolymerisation unter Zusatz von radikalischen Initiatoren, gegebenenfalls Molekulargewichtsreglern, und bevorzugt unter Verwendung von organischen Lösungsmitteln, die mit Wasser mischbar sind. Die Komponenten können im Gemisch verwendet werden oder sie werden nacheinander eingesetzt. Molekulargewicht und Glasübergangstemperatur lassen sich durch Monomerauswahl, Regler und Starterkonzentration beeinflussen.

Die Herstellung von Amino(meth)acrylatharzen kann auch durch polymeranaloge Umsetzung erfolgen. So sind auch epoxidgruppenhaltige radikalisch polymerisierbare Monomere einzusetzen, wie z.B. Glycidylester der (Meth)Acrylsäure oder Maleinsäure oder Fumarsäure, oder Glycidylether von ungesättigten Alkoholen wie Vinyl- oder Allylalkohol. Andere geeignete Verbindungen sind auch Vinyl- oder Allylester von epoxidierten Fettsäuren wie die Epoxystearinsäureallylester oder epoxidierte Diolefine wie 1-Methyl-1-vinylethylenoxid. Der Anteil der Epoxidgruppen beträgt zwischen 8 und 40 %, bevorzugt zwischen 12 und 30 %. Nach vollständiger Beendigung der Polymerisation kann dann die Umsetzung mit Aminen stattfinden. Als Amine sind sekundäre Amine für die Umsetzung besonders geeignet. Beispielsweise Dialkylamine mit gleichen oder verschiedenen Substituenten wie Dimethyl-, Diisopropyl-, Methylbutylamin, monocycloaliphatische Amine wie Morpholin oder Oxazolidin oder Piperidin oder Mono- oder Dialkanolamine wie N-Methylaminoethanol oder Diethanolamin, oder das Diketimin des Diethylentriamins. Beispiele für primäre Amine oder Aminoalkohole sind 2-Ethylhexylamin oder Ethanolamin. Die primären Amine werden meist nur im Gemisch mit sekundären eingesetzt, um die Viskosität der Produkte gering zu halten.

Über die Anzahl der Amino- und OH-Funktionen kann die Löslichkeit der Bindemittel beeinflußt werden. Ebenso sind für eine gute Vernetzung im Film mindestens zwei reaktive Gruppen, wie reaktive Hydroxylgruppen und/oder reaktive Aminogruppen, im Molekül notwendig. Sie sind durch die Anzahl der entsprechenden Monomere bei der Reaktion zu steuern. Die erfindungsgemäßen Harze haben eine Molekularmasse von 1500 bis 30000, bevorzugt von 2500 bis 20000.

Die Harze können selbst- oder fremdvernetzend sein. Als Vernetzer geeignete Verbindungen sind z.B. blockierte Polyisocyanate, Melaminharze, umesterungs- oder umamidierungsfähige Vernetzer oder Vernetzer mit endständigen Doppelbindungen. Diese Vernetzer sind in der Literatur gut beschrieben, so z.B. Vernetzer auf Triazinbasis in der DE 16 69 593, Vernetzer mit endständigen Doppelbindungen in der EP-A 0 245 786, Vernetzer auf Basis verkappter Isocyanate in Farbe und Lack 89, Jahrgang 12, 1983, S. 928 ff, umesterungs- oder umamidierungsfähige Vernetzer in der EP-A 0 004 090 oder der DE-A- 34 36 345.

Die Harze oder die Harzmischungen für die Zusatzdispersion können einzeln oder im Gemisch sowie auch in Anwesenheit des gegebenenfalls benötigten Vernetzers neutralisiert und in die Wasserphase überführt werden. Danach wird eine besonders lösemittelarme Dispersion hergestellt, die den besonderen Anforderungen entspricht. Die Auswahl der Harze in der Zumischdispersion erfolgt so, daß durch den Zusatz das Eigenschaftsbild des Lackfilms nicht negativ beeinflußt wird. Es ist also auf eine Verträglichkeit der Harze untereinander zu achten. Außerdem ist sicherzustellen, daß die Vernetzung durch Verschiebung der Anteile der Bindemittelkomponenten nicht gestört wird. Das ist so zu erreichen, daß ein benötigter Vernetzer in die Zumischdispersion integriert wird. Eine andere Möglichkeit liegt darin, die jeweilige Zumischkomponente in den Vernetzungsverhältnissen zu berücksichtigen oder auszutauschen. Dabei ist zu beachten, daß die Gemische der verschiedenen Substanzen einen Einfluß auf die Mindestfilmbildungstemperatur haben.

Eine bevorzugte Arbeitsweise besteht darin, daß die Harze der Zumischkomponenten B) so gewählt werden, daß sie vom gleichen Harztyp sind wie die im Basisbindemittelgemisch A) vorhandenen Harze. Die Zugabe der Zumischdispersionen kann so erfolgen, daß in ein fertiges die Dispersion A) enthaltendes Elektrotauchbeschichtungsbad eine Dispersion B) mit den geforderten Eigenschaften nachträglich eingebracht wird und dann ein homogenes Bad ergibt. Eine andere Variante besteht darin, daß man bei der Herstellung und Mischung der Bestandteile des Beschichtungsbades einen Anteil der Bindemittel A) direkt durch die Zumischdispersion B) ersetzt.

Beispiele für die in den Beschichtungsbädern eingesetzten Basisharze der Dispersionskomponente A) sind in den Patenten EP-A 82 291, EP-A-0 234 395 oder auch EP-A-0 209 857 beschrieben. Es sind die üblichen primäre, sekundäre oder tertiäre Aminogruppen enthaltenden Amino-Epoxidharze mit einer Aminzahl zwischen 45 bis 120 (mg KOH pro g Festharz) und einer Hydroxylzahl von 50 bis 500. Ist die Aminzahl zu hoch, so entsteht eine unruhige Oberfläche, ist sie zu niedrig, so ist die Löslichkeit des Harzes zu gering. Die reaktiven Hydroxylgruppen und reaktiven Aminogruppen sind für die Vernetzungsreaktion wesentlich. Ihre Anzahl beträgt mindestens 2, bevorzugt mindestens 4 pro Molekül. Ist der Vernetzungsgrad zu gering, so bleiben die Filme nach der Vernetzung gegen Lösungsmittel empfindlich.

Als Epoxidharze werden auch epoxidgruppenhaltige aliphatische oder cycloaliphatische Kohlenwasserstoffe verstanden, die durch Epoxidierung mit Persäuren herzustellen sind. Die Aminogruppen werden zweckmäßig durch die Addition von NH-reaktiven Verbindungen mit den Epoxidgruppen eingeführt. Sie sollten nicht im überschuß eingesetzt werden, um mögliche Verunreinigungen und Nebenreaktionen gering zu halten.

Zu den einzusetzenden Bindemitteln gehören auch Polymerisate, wie sie beispielsweise in EP-A-0 261 385 beschrieben sind. Sie sind durch Copolymerisation von Glycidyl-(meth)acrylaten oder Allylglycidylethern mit ungesättigten Monomeren zu erhalten. Als ungesättigte olefinische Monomere sind z.B. andere gesättigte, lineare oder verzweigte Acryl- oder Methacrylsäureester zu verstehen, Styrol, Vinyltoluol oder auch funktionalisierte (Meth)Acrylsäureester. Die zur Löslichkeit notwendigen Aminogruppen können durch Umsetzen der Epoxidgruppe mit sekundären Aminen oder Aminoalkoholen eingeführt werden oder über Einpolymerisation von in der Estergruppe linearen oder cyclischen sekundären oder tertiären Stickstoff enthaltenden (Meth)Acrylverbindungen.

Beispiele für weitere Bindemittel, die für Elektrotauchbeschichtungsbäder eingesetzt werden können, sind in der EP-A-0 209 857 beschrieben. Es sind Umsetzungsprodukte von Diphenolen, wie z.B. Bisphenol A oder Bisphenol F mit primären Aminen und Formaldehyd. Diese können mit einem halbverkapptem Isocyanat als Reaktionsprodukt aus einem aliphatischen oder aromatischen Di- oder Polyisocyanat und einem primären Amin umgesetzt werden. Als Amin können aliphatische Amine oder Alkanolamine eingesetzt werden. Die Umsetzungsprodukte sollen durchschnittlich eine sekundäre Aminogruppe pro Molekül enthalten. Gegebenenfalls können vorhandene OH-Gruppen mit Epoxidverbindungen und/oder weiteren Isocyanatgruppen umgesetzt werden.

Die Harze können selbst- oder fremdvernetzend sein. Als Vernetzer sind geeignete Verbindungen z.B. Triazinharze, blockierte Isocyanate, umesterungs- oder umamidierungsfähige Vernetzer, Vernetzer mit endständigen Doppelbindungen und zur Michael-Addition fähige Vernetzer mit aktivem Wasserstoff.

Vernetzer auf Triazinbasis sind in der Literatur beschrieben, ebenso wie Vernetzer mit endständigen Doppelbindungen, wie z.B. in der EP-A-0 245 786. Geeignete Isocyanatverbindungen werden z.B. in Farbe und Lack 89. Jahrgang, 12, 1983, S. 928 ff beschrieben. Es sind die üblichen Di- oder Polyisocyanate auf Basis von aliphatischen und/oder aromatischen Isocyanaten oder Gemische davon, die mit den bekannten Blockierungsmitteln, wie Alkoholen, Phenolen, Oximen, Hydroxymethacrylaten, Alkanolaminen umgesetzt werden.

Vernetzer auf Basis von CH-aziden Verbindungen sind z.B. in der DE-A-33 24 211 beschrieben. Es sind Derivate von Mono- oder Dicarbonsäureestern, die mit zur Michael-Addition fähigen Doppelbindungen reagieren können. Vernetzer vom Umesterungstyp sind in der DE-A 34 36 345 beschrieben. Sie können gut mit Verbindungen reagieren, die aktive Wasserstoffatome tragende Heteroatome im Bindemittel einreagiert haben, wie z.B. OH-, SH- und NH-Gruppen. Ebenso können sie durch Umsetzung mit Carbonsäureestern oder -amiden vernetzen.

Die Harze können als Einzelkomponente oder als Gemisch eingesetzt werden. Sie werden als lösungsmittelhaltige Harze mit einer notwendigen Menge der üblichen Säuren, z.B. Ameisensäure, Essigsäure, Phosphorsäure, Milchsäure oder Citronensäure neutralisiert, und nach Zusatz von gegebenenfalls benötigten Pigmenten, Additiven und Hilfsstoffen in die Wasserphase überführt. Dieses Beschichtungsbad wird dann mit vollentsalztem Wasser auf den gewünschten Festkörper eingestellt. Eine andere bevorzugte Möglichkeit besteht darin, daß die Bindemittel nach Neutralisation auf bekannte Art und Weise in eine Bindemitteldispersion überführt werden. Zu dieser Dispersion wurde als zweite Komponente eine Pigmentpaste zugesetzt, die aus einer Anreibung eines Anreibebindemittels mit den Pigmenten, Füllstoffen, Additiven, Säuren und weiteren Hilfsmitteln besteht. Die jeweils notwendige Säuremenge ist durch Versuche auf einfache Art zu ermitteln.

Die in den erfindungsgemäßen Bindemitteldispersionen enthaltenen Dispersionen A) und B) weisen einen Lösungsmittelgehalt von über 4 Gew.-% bzw. von unter 3 Gew.-% auf. Bei diesen Lösemitteln handelt es sich um solche, die bei der Herstellung der Harze eingesetzt wurden und anschließend in den Harzen verblieben sind. Bei diesen Lösemitteln handelt es sich um solche, die bei Raumtemperatur nicht in jedem Verhältnis mit Wasser mischbar sind. Es können also Lösemittel sein, die teilweise mit Wasser mischbar sind oder mit Wasser überhaupt nicht mischbar sind.

Beispiele für derartige Lösemittel sind aliphatische und aromatische Kohlenwasserstoffe, Alkohole mit einem Siedepunkt von 130 bis 220°C, wie n-Amylalkohol, Isoamylalkohol, t-Amylalkohol, 1-Hexanol,2-Ethylhexanol-1, Cyclohexanol; Ester mit einem Siedepunkt von 75 bis 150°C, wie n-Propylacetat, Isopropylpropionat, t-Butylacetat, Pentylacetat, Hexylacetat und Cyclohexylacetat; Glykolether; Ketone mit einem Siedepunkt von 80 bis 170°C, wie Methyl-n-propylketon, Methylisopropylketon, Ethylisopropylketon, Diisopropylketon, Methylisobutylketon, Ethyl-n-butylketon, Diisobutylketon, Methylisoamylketon und Cyclohexanon.

Die erfindungsgemäßen Beschichtungszusammensetzungen können nach an sich bekannten Verfahren gegebenenenfalls korrigiert werden. In diesen Bädern können metallisch leitende Substrate nach bekannten Methoden beschichtet werden. Durch die üblichen Korrekturhilfsmittel werden die vorteilhaften Beschichtungseigenschaften nicht beeinträchtigt. Nach dem Abschneiden der Elektrotauchlacküberzüge werden diese auf übliche Art und Weise weiterverarbeitet. Sie können nach bekannten Methoden vernetzt werden, z.B. durch Erwärmen auf erhöhte Temperaturen, und dann mit weiteren Folgebeschichtungen versehen werden. Eine weitere Möglichkeit ist die, daß das zu beschichtende Substrat vor dem Vernetzen einer Folgebeschichtung unterzogen wird und dann beide oder mehrere Beschichtungen gleichzeitig einem Vernetzungsprozeß unterzogen werden.

Die beschichteten Teile oder Werkstücke zeichnen sich durch eine hohe Oberflächengüte aus. Sie geben außerdem ein gutes Verhalten im Korrosionsschutz.

Durch die erfindungsgemäße Kombination der Dispersionen A) und B) ergeben sich im Beschichtungsbad eindeutige Vorteile. Es wird einerseits eine gesteigerte Stabilität des Bades beobachtet und ein günstigerer Wert im benötigten Neutralisationsgrad. Dieses Verhalten führt zu einem besseren Abscheideäquivalent des Lackes, da eine geringere Menge der zugesetzten Säure neutralisiert werden muß, um den Lack auf dem zu beschichtenden Substrat zu koagulieren. Das ergibt dabei einen geringeren Stromfluß und eine geringere Erwärmung des Beschichtungsbades. So wird die notwendige Kühlkapazität verringert, um das Badmaterial auf konstanter Temperatur zu halten, und es führt zu einer Energieeinsparung bei der Beschichtung.

Zusätzlich ist ein besseres Verhalten in der Schichtdickenverteilung festzustellen, d.h. auf einer beschichteten Fläche ist nur eine geringe Abweichung von der mittleren Schichtdicke zu bemerken. Das führt dazu, daß in einem Beschichtungsbad auch unregelmäßig geformte Teile, die deshalb einen variierenden Abstand von der Gegenelektrode haben, eine homogenere Oberfläche mit gleichmäßiger Schicht besitzen. Ein weiterer Vorteil ist außerdem in einem deutlich verbesserten Umgriffsverhalten zu beobachten. Damit werden z.B. schlecht zugängliche Oberflächen besser beschichtet. Es treten an diesen Stellen höhere Schichtdicken auf und zusätzlich wird die beschichtete Fläche in dem Hohlraum verlängert. Damit zeigt sich ein vorteilhafteres Verhalten im Korrosionsschutz.

Ein Beschichtungsmaterial aus der reinen Zumisch-Dispersion mit den üblichen Zusatzstoffen erweist sich als weniger gut geeignet, da die vorhandenen Bindemittelmicellen im Bad nur wenig mit den üblichen Lösungsmitteln zu korrigieren sind und auf die gewünschte Beschichtungsparameter einzustellen sind. Der gewünschte Effekt ist auch nicht zu erzielen, wenn der Bindemittelanteil als Lösungsmittelform schon am Anfang berücksichtigt wird oder neutralisiert später zugefügt wird, oder aber in Form einer üblichen wäßrigen Dispersion eingesetzt wird, die als ausschließliches Bindemittel oder Bindemittelmischung in bekannter Weise von geringen Mengen zugesetzter Lösungsmittel beeinflußt wird. Es sollte eine Differenz in den Mindestfilmbildungstemperaturen zwischen den Basisharzen und den Zusatzdispersionen von mindestens 10°C vorhanden sein.

Alle Prozentangaben beziehen sich auf Gewichtsprozent. Der Festkörper wird analog DIN 53 216 bei 150°C bestimmt.

### Herstellung der Komponente A:

In den folgenden Herstellungsbeispielen wurden die Mindestfilmbildungstemperaturen jeweils wie folgt bestimmt:
Die erhaltenen Lösungen wurden jeweils neutralisiert und mit Wasser auf einen Harz-Festkörpergehalt von 15 bis 20 Gew-.% verdünnt. Dann wurde wie im Beschreibungsteil beschrieben vorgegangen.

### Herstellungsbeispiel A:

Gemäß EP 12 463 werden 391 g Diethanolamin, 189 g 3-(N,N-Dimethylamino)-propylamin und 1147 g eines Adduktes aus 2 mol Hexandiamin-1,6 und 4 mol Glycidylester der Versaticsäure (Cardura ^{R} E 10 von Shell) zu 5273 g Bisphenol A-Epoxidharz (Epoxidäquivalentgewicht ca. 475) in 3000 g Ethoxypropanol gegeben. Das Reaktionsgemisch wird 4 Stunden unter Rühren bei 85°C bis 90°C und dann eine 1 Stunde bei 120°C gehalten. Anschließend wird mit Ethoxypropanol auf einen Festkörper von 60 % verdünnt. Mindestfilmbildungstemperatur: 19°C.

### Herstellungsbeispiel B:

Gemäß EP 12 463, Beispiel 1b, wird wie in Beispiel A verfahren. Das entstehende Umsetzungsprodukt wird vor dem Verdünnen auf 80°C abgekühlt und mit einer Lösung von 10 g eines Inhibitors in 755 g einer 50%igen Lösung von Butoxymethacrylamid in Butanol versetzt. Es wird langsam in 1 Stunde auf 120°C erhitzt und diese Temperatur 3 Stunden gehalten, wobei Butanol unter Anlegen von Vakuum abdestilliert wird. Danach wird auf einen Festkörper von 65 % mit Methoxypropanol verdünnt. Mindestfilmbildungstemperatur: 22°C.

### Herstellungsbeispiel C:

2262 g Epoxidharz auf Basis Bisphenol A (Epoxid-Äquivalentgewicht ca. 260) werden in 2023 g Diethylenglykoldimethylether bei 60° bis 70°C gelöst und nach Zugabe von 0,8 g Hydrochinon und 2453 g eines Halbesters aus Tetrahydrophthalsäureanhydrid und Hydroxyethylmethacrylat auf 100° bis 110°C erhitzt. Die Temperatur von 100 bis 110°C wird so lange gehalten, bis die Säurezahl unter 3 (mg KOH/g) gesunken ist. Dann wird das Reaktionsprodukt mit 3262 g einer 70%igen Lösung eines Monoisocyanats aus Toluylendiisocyanat und Dimethylethanolamin (Molverhältnis 1:1) in Diethylenglykoldimethylether umgesetzt bis zum NCO-Wert von Null. Mindestfilmbildungstemperatur: 25°C.

### Herstellungsbeispiel D:

Es werden 228 g Bisphenol A (1 Mol) mit 260 g Diethylaminopropylamin (2 Mol) und 66 g Paraformaldehyd (91 %; 2 Mol) in Gegenwart von 131 g Toluol als Azeotropschleppmittel bis zur Abtrennung von 42 g Reaktionswasser umgesetzt. Nach Addition von 152 g Diethylenglykoldimethylether und Kühlen des Produktes auf 30°C werden innerhalb von 45 Minuten 608 g (2 Mol) eines mit 2-Ethylhexanol halbblockierten Toluylendiisocyanats zugegeben. Nach Erreichen eines NCO-Wertes von praktisch Null werden 1400 g dieser Lösung mit einer Lösung von 190 g eines Epoxidharzes auf Basis von Bisphenol A (Epoxidäquivalentgewicht ca. 190) und 250 g (1 Mol) eines Glycidylesters einer gesättigten tertiären C₉ bis C₁₁ Monocarbonsäure in 389 g Diethylenglykoldimethylether versetzt und bei 95°C bis 100°C bis zu einem Epoxidwert von Null umgesetzt. Mindestfilmbildungstemperatur: 30°C.

### Herstellungsbeispiel E:

a) 832 g des Monocarbonats von einem Epoxidharz auf Basis Bishphenol A (mit einem Epoxid-Äquivalent von 180, Epikote 828) werden mit 830 g Polycaprolactandiol (CAPA 205) mit einer OH-Zahl von 135 und 712 g Diglykoldimethylether gemischt und bei 70 bis 140°C mit ungefähr 0,3 % BF₃-Etherat zur Reaktion gebracht, bis eine Epoxidzahl von 0 erreicht wird. Zu diesem Produkt (Festkörper 70 %, 2 Äquivalente Carbonat) werden bei 40 bis 80°C in Gegenwart von 0,3 % Zn-Acetylacetonat als Katalysator 307 g eines Umsetzungsproduktes aus 174 g Toluylendiisocyanat (2 Äquivalente NCO) mit 137 g 2-Ethylhexanol unter Zugabe von 0,3 % Benzyltrimethylammoniumhydroxid (Triton B) mit einem NCO-Gehalt von ca. 12,8 % zugegeben. Es wird bis zu einen NCO-Wert von ca. Null umgesetzt und dann mit Diglykoldimethylether auf ca. 70 % Festkörper eingestellt.
b) Zu 1759 g eines Biscarbonats auf Basis eines Epoxidharzes auf Basis Bisphenol A mit einem Epoxidäquivalent von ca. 475 (Epikote 1001^{R}) werden bei 60 bis 80°C 618 g eines Umsetzungsproduktes aus 348 g Toluylendiisocyanat (80 % 2,4 Isomeres; 20 % 2,6 Isomeres) mit 274 g 2-Ethylhexanol unter Zugabe von 0,3 % Benzyltrimethylammoniumhydroxid als Katalysator mit einem Rest-NCO-Gehalt von 12,8 % langsam zugegeben unter Katalyse von 0,3 % Triton B ^{R}. Die Reaktion wird bis zu einem NCO-Wert von ca. Null fortgesetzt. Das Produkt hat einen Feststoffgehalt von 70 %.
c) Zu 860 g Bishexamethylentriamin in 2315 g Methoxypropanol gelöst werden bei einer Temperatur von 20 bis 40°C g des Umsetzungsproduktes aus 137 g 2-Ethylhexanol mit 174 g Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr Null umgesetzt. Dann werden 4737 g des Umsetzungsproduktes b) und 3246 g des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt hat einen Festkörper von 60 %. Mindestfilmbildungstemperatur: ca. 21°C.

### Herstellungsbeispiel F:

768 g Trimellithsäureanhydrid und 2000 g eines Glycidylesters einer α-verzweigten, tertiären C₁₀-Monocarbonsäure (Cardura E10 ^{R}) werden vorsichtig unter Rühren auf 190°C erhitzt, wobei ab 90°C eine exotherme Reaktion beginnt. Danach wird auf 140°C gekühlt und mit 2,75 g N,N-Dimethylbenzylamin versetzt. Das Reaktionsgut wird auf 145°C gehalten, bis eine Säurezahl unter 3 erreicht wird. Wenn nötig, wird eine berechnete Menge Cadura^{R} E10 zusätzlich zugegeben. Das Umsetzungsprodukt wird mit 2-Butoxyethanol auf 80 % Festkörper verdünnt.

### Herstellungsbeispiel G:

Es werden 498 g eines Umsetzungsproduktes aus 1 Mol Tris(hydroxymethl)aminomethan und 1 Mol n-Butylacrylat 50 % in Toluol gelöst und zwischen 25 und 40°C unter ausreichender Kühlung portionsweise mit 174 g Toluylendiisocyanat versetzt. Am Ende der Reaktion ist der NCO-Wert praktisch Null. Nach dem Erwärmen auf 70°C werden 60 g Paraformaldehyd und 0,01 % Triethylamin zugegeben und die Temperatur erhöht, bis das Reaktionswasser (1 Mol pro Mol Formaldehyd) azeotrop abdestilliert ist. Nach dem Abkühlen werden 1064 g eines halbverkappten Isocyanats aus Hydroxyethylmethacrylat und Toluylendiisocyanat (Molverhältnis 1:1) zugesetzt und bis zum NCO-Wert von ca. Null umgesetzt. Dann wird das Toluol abdestilliert und mit Diethylenglykoldimethylether auf 75 % Festkörper verdünnt.

### Herstellungsbeispiel H:

Zu 431 g einer Lösung (75 % in Ethylacetat) eines Umsetzungsproduktes aus 3 Mol Toluylendiisocyanat mit 1 Mol Trimethylolpropan (Desmodur L ^{R}) werden bei 70°C langsam unter Rühren 160 g Caprolactam zugefügt. Die Reaktionsmischung wird danach bei 70°C gehalten, bis der NCO-Gehalt praktisch auf Null gesunken ist. Dann wird 2-Butoxyethanol (204 g) zugegeben und das Ethylacetat über eine Kolonne bis zu einem Festkörper von 70 % abdestilliert.

### Herstellung der Komponente B:

### Beispiel A1:

Gemäß DE-A-37 12 910 wird ein Harz analog Beispiel A hergestellt mit der Maßgabe, daß als Lösungsmittel Xylol verwendet wird. Dieses Produkt wird dann mit einer entsprechenden Menge Säure versetzt und in die Wasserphase übergeführt. Dann wird das Lösungsmittel azeotrop abdestilliert. Der Lösungsmittelgehalt beträgt ca. 0,5 %. Die Mindestfilmbildungstemperatur beträgt ca. 41°C.

### Beispiel B2:

Gemäß DE-A-37 12 910 wird ein Harz analog Beispiel B dargestellt in Xylol als Hauptlösungsmittel. Nach überführen des Bindemittels durch Neutralisation und Verdünnen mit Wasser in eine Dispersion, wird das Lösungsmittel azeotrop abdestilliert. Der Restlösungsmittelgehalt beträgt ca. 2 %. Die Mindestfilmbildungstemperatur eines Klarlackes beträgt 33°C.

### Beispiel I3:

In einem Reaktionskolben mit Rührer, Tropftrichter und Rückflußkühler werden unter Inertgas 972 g Ethoxypropanol und 1957 g eines Epoxidharzes auf Basis Bisphenol A mit einem Epoxidäquivalentgewicht von 471 g durch Erwärmen auf etwa 50°C gelöst. Nach Zusatz von 210 g Diethanolamin wird etwas 2 Stunden bei 50°C gehalten und anschließend 102 g Dimethylaminopropylamin zugegeben. Unter Ausnutzen der exothermen Wärmetönung wird auf 120°C geheizt und diese Temperatur unter Rühren 3 Stunden gehalten. 2270 g des vorstehenden Bindemittels werden auf 55°C erwärmt, mit 43,3 g Ameisensäure (85 %) neutralisiert und mit 2970 g Wasser auf einen Festkörper von etwa 35 % verdünnt. Durch azeotrope Destillation gegebenenfalls unter Anlegen von Vakuum wurde das Ethoxypropanol weitgehend entfernt. Anschließend wird mit destilliertem Wasser auf ca. 25 % Festkörper verdünnt. Der Lösungsmittelgehalt an Ethoxypropanol beträgt ca. 2,5 %. Die Mindestfilmbildungstemperatur beträgt 40°C.

### Beispiel E4:

Es wird ein Bindemittel nach Beispiel E hergestellt. Ein Teil der Lösungsmittel wird im guten Vakuum schonend abdestilliert. Das Produkt wird mit 40 MEQ Ameisensäure neutralisiert und mit vollentsalztem Wasser in eine Dispersion mit dem Festkörper von 30 % überführt. Aus dieser wird dann sukzessive 200 % Ultrafiltrat mit einer üblichen Ultrafiltrationseinrichtung entzogen und mit vollentsalztem Wasser jeweils wieder aufgefüllt. Der Lösemittelgehalt beträgt etwa 1 %. Das Bindemittel hat eine Mindestfilmbildungstemperatur von 38°C.

### Pigmentpaste P 1:

Es werden 100 g eines Bindemittels nach EP-A-0 183 025, Beispiel 5, (80 %) mit 3,7 g Ameisenäsure und 240 g vollentsalztem Wasser innig vermischt und ein Klarlack hergestellt. Dieser wird mit 400 g Titandioxid, 372 g Kaolin, 7,5 g Ruß, 12,5 g Dibutylzinnoxid und 8 g Pb-Oxid homogen vermischt und mit 465 g Wasser auf eine geeignete Viskosität eingestellt. Der Festkörper der Pigmentpaste beträgt ungefähr 55 %. Dann wird diese Paste auf einer Perlmühle auf die notwendige Kornfeinheit vermahlen.

### Lackansätze:

Es werden verschiedene Harze (fest/fest) gemischt und mit einer Menge Säure homogen vermischt und diese dann mit vollentsalztem Wasser in eine Dispersion übergeführt. Der Festkörper soll ca. 30 % betragen. Die Säuremenge ist aus dem MEQ-Wert (mmol Säure/100 g Festkörper) zu berechnen. Zu 2000 g von diesen Ansätzen werden dann 600 g einer Pigmentpaste nach Beispiel P1 langsam zugegeben unter Rühren und mit vollentsalztem Wasser auf einen Badfestkörper von 18 % verdünnt.

| | Harze | Verhältnis | MEQ (mmol Säure/ 100 g FK) |
|---|---|---|---|
| 1. | A : C : F | 60 : 20 : 20 | 34 Ameisensäure |
| 2. | A : C : G | 60 : 25 : 15 | 29 |
| 3. | B : H | 80 : 20 | 35 |
| 4. | A : C : G : H | 50 : 30 : 10 : 10 | 32 |
| 5. | D : A | 60 : 40 | 29 Essigsäure |
| 6. | E : A | 60 : 4o | 27 |
| 7. | D : A | 70 : 30 | 33 Ameisensäure |

Es werden die Ansätze analog wiederholt, nur daß 30 % der Harzanteile A oder B durch die Dispersionen der Beispiele A1, B2 und I3 ersetzt werden. x Dispersion A1; y Dispersion B2; z Dispersion I3.
Diese Bäder werden dann im Vergleich abgeschieden.

| | Abscheideäquivalent Asec/g | Umgriff (Reichweite) cm | 7 µm-Grenze cm |
|---|---|---|---|
| 1. | 36 | 22 | 12,5 |
| 1x. | 30 | 25 | 15 |
| 2. | 33 | 23 | 13 |
| 2x. | 27 | 26 | 17,5 |
| 3. | 40 | 20 | 10 |
| 3y. | 33 | 24 | 14 |
| 4. | 35 | 24 | 13 |
| 4x. | 29 | 27 | 18 |
| 5. | 32 | 27 | 16 |
| 5x. | 25 | 27 | 23 |
| 6. | 30 | 27 | 17 |
| 6x. | 23 | 27 | 22 |

7. Es wurde aus den Bindemitteln der Beispiele A und D eine Mischung 30 : 70 (Festkörper) hergestellt und im Vakuum ein Teil des Lösungsmittels vorsichtig abdestilliert. Nach Zugabe von Ameisensäure (40 MEQ) wird eine Dispersion hergestellt mit dem Festkörper von 40 %. Aus 1350 g dieser Mischung, 900 g vollentsalztem Wasser und mit 540 g der Pigmentpaste P1 wird ein KTL-Bad hergestellt und dann mit Wasser auf einen Festkörper von 18 % verdünnt.
7x. Es wurde ein Bad nach 7. hergestellt, wobei der Harzanteil nach A ersetzt wird durch einen aliquoten Anteil von A1.
7z. Es wurde ein Lack hergestellt nach 7., wobei die Harzmenge nach A durch eine entsprechende Menge von I3 ersetzt wird.

| | MEQ mmol/100gFk | Reichweite cm | 7 µm-Grenze cm |
|---|---|---|---|
| 7 | 30 | 25 | 9 |
| 7x | 29 | 27 | 13 |
| 7z | 30 | 27 | 11 |

Der Umgriff wurde durch Eintauchen von zwei parallelen Blechen im Abstand von 4 mm, die an den Seiten durch ein nicht-leitfähiges Material verbunden sind, in den Lack bestimmt, wobei die Eintauchtiefe bei 27 cm lag. Eine Gegenelektrode wurde im Abstand von 5 cm angebracht. Es wurde die Reichweite der Beschichtung und die Entfernung von der unteren Seite bestimmt, bei der die Schichtstärke des Films bei 7 µm lag.

## Patentansprüche

1. Wäßrige Lösung oder Dispersion eines Bindemittels für an der Kathode abscheidbare wäßrige Überzugsmittel enthaltend ein durch Säure neutralisiertes, basisches filmbildendes Harz, organische Lösemittel, sowie gegebenenfalls Vernetzer für das filmbildende Harz, **dadurch gekennzeichnet**, daß das durch Säure neutralisierte basische filmbildende Harz in Form einer wäßrigen Lösung oder Dispersion vorliegt, die erhalten wurde durch Vermischen von
A) 95 bis 50 Gew.-% (bezogen auf den Harzfestkörper) einer wäßrigen Lösung oder Dispersion eines oder mehrerer neutralisierter, basischer filmbildender Harze mit einem Harzfestkörpergehalt von 25 bis 55 Gew.-% und mit einem Lösemittelgehalt über 4 Gew.-%, jeweils bezogen auf die Gesamt lösung oder -dispersion und einer Mindestfilmbildungstemperatur unter 30°C, mit
B) 5 bis 50 Gew.-% (bezogen auf den Harzfestkörper) einer wäßrigen Lösung oder Dispersion eines oder mehrerer durch Säure neutralisierter basischer filmbildender Harze mit einem Harzfestkörpergehalt von 25 bis 55 Gew.-% und mit einem Lösemittelgehalt unter 3 Gew.-%, jeweils bezogen auf die Gesamtlösung oder -dispersion und einer Mindestfilmbildungstemperatur von mindestens 27°C,
wobei die Differenz der Mindestfilmbildungstemperaturen der Dispersionen A) und B) mindestens 10°C beträgt.

2. Wäßriges Bindemittel nach Anspruch 1, dadurch gekennzeichnet, daß die Mindestfilmbildungstemperatur der Dispersion B) mindestens 33°C beträgt.

3. Wäßriges Bindemittel nach Anspruch 1 oder 2,
dadurch gekennzeichnet, daß der Gehalt der Lösung oder Dispersion B) an organischen Lösemitteln maximal 1 Gew.-% beträgt.

4. Wäßriges Bindemittel nach einem der vorhergehenden Ansprüche, dadurch gekennzeichnet, daß die basischen filmbildenden Harze der wäßrigen Lösungen oder Dispersionen A) und B) Harze mit gleichem chemischen Aufbau sind.

5. Wäßriges Bindemittel nach einem der Ansprüche 1 bis 3, dadurch gekennzeichnet, daß in den wäßrigen Lösungen oder Dispersionen A) und B) basische filmbildende Harze mit unterschiedlichem chemischen Aufbau vorliegen.

6. Wäßriges Bindemittel nach einem der vorhergehenden Ansprüche, dadurch gekennzeichnet, daß das in der wäßrigen Lösung oder Dispersion A) und/oder B) enthaltene basische filmbildende Harz ein Aminoepoxidharz ist.

7. Wäßriges Bindemittel nach Anspruch 6, dadurch gekennzeichnet, daß die wäßrigen Lösungen oder Dispersionen A) und B) Aminoepoxidharze mit gleichem chemischen Aufbau enthalten.

8. Wäßriges Bindemittel nach einem der vorhergehenden Ansprüche, dadurch gekennzeichnet, daß die wäßrige Lösung oder Dispersion der Komponente B) erhalten wurde durch Entfernen des über 3 Gew.-% hinausgehenden Lösemittelanteiles durch Destillation, azeotrope Destillation, Ultrafiltration, Elektrodialyse oder umgekehrte Osmose aus der wäßrigen Lösung oder Dispersion des neutralisierten basischen filmbildenden Harzes.

9. Wäßriges Bindemittel nach Anspruch 8, dadurch gekennzeichnet, daß die wäßrige Lösung oder Dispersion der Komponente B) erhalten wurde durch Entfernen des über 3 Gew.-% hinausgehenden Lösemittelanteiles aus der wäßrigen Lösung oder Dispersion der Komponente A).

10. Wäßriges Bindemittel nach Anspruch 9, dadurch gekennzeichnet, daß das Harz der Komponenten A) und B) ein Aminoepoxidharz mit gleichem chemischen Aufbau ist.

11. Wäßriges Überzugsmittel, enthaltend die wäßrigen Lösungen oder Dispersionen nach einem der Ansprüche 1 bis 10 als Bindemittel, zusammen mit üblichen Lackzusätzen, Pigmenten, Füllstoffen und/oder zusätzlichen organischen Lösemitteln.

12. Verwendung der wäßrigen Überzugsmittel nach Anspruch 11 zur Beschichtung elektrisch leitfähiger Substrate durch kathodische Abscheidung.

## Claims

1. Aqueous solution or dispersion of a binder for aqueous coating compositions which are depositable at the cathode, containing a basic film-forming resin which is neutralised with acid, organic solvents, and optionally cross-linking agents for the film-forming resin, characterised in that the basic film-forming resin which is neutralized with acid is present in the form of an aqueous solution or dispersion obtained by mixing
A) from 95 to 50 wt-% (calculated on the resin solids) of an aqueous solution or dispersion of one or more basic film-forming resins which are neutralized, having a resin solids content of from 25 to 55 wt-% and a solvent content greater than 4 wt-%, calculated in each case on total solution or dispersion, and having a minimum film-forming temperature below 30°C, with
B) from 5 to 50 wt-% (calculated on the resin solids) of an aqueous solution or dispersion of one or more basic film-forming resins which are neutralized with acid, having a solids content of from 25 to 55 wt-% and a solvent content of less than 3 wt-%, calculated in each case on total solution or dispersion, and having a minimum film-forming temperature of at least 27°C,
the difference between the minimum film-forming temperatures of the dispersion A) and the dispersion B) being at least 10°C.

2. Aqueous binder according to Claim 1, characterized in that the minimum film-forming temperature of the dispersion B) is at least 33°C.

3. Aqueous binder according to Claim 1 or 2, characterised in that the maximum organic solvents content of the solution or dispersion B) is 1 wt-%.

4. Aqueous binder according to one of the preceding claims, characterised in that the basic film-forming resins of the aqueous solutions or dispersions A) and B) are resins having the same chemical structure.

5. Aqueous binder according to one of Claims 1 to 3, characterised in that basic film-forming resins having different chemical structure are present in the aqueous solutions or dispersions A) and B).

6. Aqueous binder according to one of the preceding claims, characterised in that the basic film-forming resin contained in the aqueous solution or dispersion A) and/or B) is an aminoepoxy resin.

7. Aqueous binder according to Claim 6, characterised in that the aqueous solutions or dispersions A) and B) contain aminoepoxy resins having the same chemical structure.

8. Aqueous binder according to one of the preceding claims, characterised in that the aqueous solution or dispersion of component B) was obtained by removing from the aqueous solution or dispersion of the basic film-forming resin which is neutralized, that portion of the solvent exceeding 3 wt-%, by distillation, azeotropic distillation, ultra-filtration, electrodialysis or reverse osmosis.

9. Aqueous binder according to Claim 8, characterised in that the aqueous solution or dispersion of component B) was obtained by removing from the aqueous solution or dispersion of component A), that portion of the solvent exceeding 3 wt-%.

10. Aqueous binder according to Claim 9, characterised in that the resin of components A) and B) is an aminoepoxy resin having the same chemical structure.

11. Aqueous coating composition containing as binder the aqueous solutions or dispersions according to one of Claims 1 to 10, together with additives which are conventional in lacquers and varnishes, pigments, extenders and/or additional organic solvents.

12. Use of the aqueous coating compositions according to Claim 11 for coating electrically conductive substrates by electrodeposition at the cathode.

## Revendications

1. Solution ou dispersion aqueuse d'un liant pour produits de revêtement aqueux déposables à la cathode, contenant une résine filmogène basique neutraliée par un acide, des solvants organiques et le cas échéant des agents réticulants pour la résine filmogène, caractérisée en ce que la résine filmogène basique neutralisée par un acide est à l'état de solution ou dispersion aqueuse qui a été obtenue par mélange de :
A) 95 à 50% en poids (sur les matières solides résineuses) d'une solution ou dispersion aqueuse d'une ou plusieurs résines filmogènes basiques neutralisées, ayant une teneur en matières solides résineuses de 25 à 55% en poids et une teneur en solvant supérieure à 4% en poids, dans les deux cas par rapport à la solution ou dispersion totale, et une température minimale de formation de film inférieure à 30°C, avec
B) 5 à 50% en poids (sur les matières solides résineuses) d'une solution ou dispersion aqueuse d'une ou plusieurs résines filmogènes basiques neutralisées par un acide, à une teneur en matières solides résineuses de 25 à 55% en poids et à une teneur en solvant inférieure à 3% en poids, dans les deux cas par rapport à la solution ou dispersion totale, et une température minimale de formation de film d'au moins 27°C, la différence entre les températures minimales de formation de film des dispersions A) et B) étant d'au moins 10°C.

2. Liant aqueux selon la revendication 1, caractérisé en ce que la température minimale de formation de film de la dispersion B) est d'au moins 33°C.

3. Liant aqueux selon la revendication 1 ou 2, caractérisé en ce que la teneur de la solution ou dispersion B) en solvants organiques est au maximum de 1% en poids.

4. Liant aqueux selon l'une des revendications précédentes, caractérisé en ce que les résines filmogènes basiques des solutions ou dispersions aqueuses A) et B) sont des résines ayant la même structure chimique.

5. Liant aqueux selon l'une des revendications 1 à 3, caractérisé en ce que les solutions ou dispersions A) et B) contiennent des résines filmogènes basiques à structures chimiques différentes.

6. Liant aqueux selon l'une des revendications précédentes, caractérisé en ce que la résine filmogène basique contenue dans la solution ou dispersion aqueuse A) et/ou B) est une résine aminoépoxydique.

7. Liant aqueux selon la revendication 6, caractérisé en ce que les solutions ou dispersions aqueuses A) et B) contiennent des résines amino-époxydiques ayant la même structure chimique.

8. Liant aqueux selon l'une des revendications précédentes, caractérisé en ce que la solution ou dispersion aqueuse du composant B) a été obtenue en éliminant la fraction de solvant dépassant 3% en poids par distillation, distillation azéotropique, ultrafiltration, électrodialyse ou osmose inverse à partir de la solution ou dispersion aqueuse de la résine filmogène basique neutralisée.

9. Liant aqueux selon la revendication 8, caractérisé en ce que la solution ou dispersion aqueuse du composant B) a été obtenue en éliminant la proportion de solvant dépassant 3% en poids à partir de la solution ou dispersion aqueuse du composant A).

10. Liant aqueux selon la revendication 9, caractérisé en ce que la résine des composants A) et B) est une résine aminoépoxydique à même structure chimique.

11. Produit de revêtement aqueux contenant les solutions ou dispersions aqueuses selon l'une des revendications 1 à 10 en tant que liant avec des additifs usuels pour peintures et vernis, des pigments, des matières de charge et/ou des solvants organiques complémentaires.

12. Utilisation du produit de revêtement aqueux selon la revendication 11 pour le revêtement de supports conducteurs de l'électricité par déposition cathodique.
